# EUROPÄISCHE PATENTSCHRIFT

(11) **EP 0 957 237 B1**
(45) Veröffentlichungstag und Bekanntmachung des Hinweises auf die Patenterteilung: **14.01.2004**
(21) Anmeldenummer: 99103447.1
(22) Anmeldetag: 23.02.1999
(51) Int. Cl.: F01D 11/12, F01D 11/10, F01D 25/14, F16J 15/44

(54) **Kühlung einer Wabendichtung in einer Gasturbine**
Cooling of a honeycomb seal in a gas turbine
Refroidissement d'un joint à nid d'abeille dans une turbine à gaz

(30) Priorität: 13.05.1998 DE 19821365
(43) Veröffentlichungstag der Anmeldung: 17.11.1999
(73) Patentinhaber: MAN Turbomaschinen AG, 46145 Oberhausen (DE)
(72) Erfinder: Beukenberg, Markus, Dr.-Ing., 66424 Homburg (DE); Aschenbruck, Emil, Dipl.-Ing., 47167 Duisburg (DE)
(74) Vertreter: Radünz, Ingo, Dipl.-Ing.

(56) Entgegenhaltungen:
- EP-A- 0 374 603
- DE-C- 19 527 781
- FR-A- 1 145 388
- US-A- 3 365 172
- US-A- 5 238 364
- PATENT ABSTRACTS OF JAPAN vol. 010, no. 349 (M-538), 26. November 1986 (1986-11-26) & JP 61 149506 A (KAWASAKI HEAVY IND LTD), 8. Juli 1986 (1986-07-08)

## Beschreibung

Die Erfindung betrifft einen Trägerring mit einer gekühlten Wabendichtung für eine Gasturbine mit den Merkmalen des Oberbegriffes des Anspruches 1.

In axialen Rotationsmaschinen bzw. Turboverdichtern bei Heißgasbetrieb werden Dichtstellen zwischen dem Gehäuse und dem Rotor als Labyrinthdichtungen ausgeführt. Zur Steigerung der Dichtwirkung werden als Gegenlaufflächen der Dichtspitzen der Laufschaufel in der ersten Turbinenstufe nach dem Eintritt des verdichteten Heißgases aus dem Hosenrohr Wabendichtungen, sogenannte Honeycomb-Dichtungen, eingesetzt (US-A-5 238 364).

Für den Heißgasbetrieb der Turbine werden solche Wabendichtungen aus hochtemperaturbeständigen Ni-Basis-Legierungen hergestellt. Bei weiterer Steigerung der Betriebstemperatur wurde bisher bei einer von der Anmelderin entwickelten Gasturbine die Materialtemperatur der Wabendichtung lediglich durch eine Gehäusewandkühlung bzw. externe Filmkühlung begrenzt abgesenkt.

Aus der US-A-3 365 172 ist eine Vorrichtung zur Kühlung des Trägerringes einer Turbine mit Hilfe von Kühlluft bekannt. Der Trägerring ist von einer die Kühlluft führenden Kammer umgeben und von Bohrungen durchdrungen, aus denen die Kühlluft austritt und in Richtung des Heißgasstromes abströmt. Solche Kühlluftbohrungen können tangential angeordnet sein und in Nuten einmünden, die in Umfangsrichtung des Trägerringes angeordnet sind. Der Trägerring kann auch auf der den Laufschaufeln zugewandten Seite mit einer Wabendichtung versehen sein. Bei dieser Ausführungsform sind die Kühlluftbohrungen radial ausgerichtet und münden in einzelne der Zellen der Wabendichtung ein. Zusätzlich zu dem Trägerring wird auf solche Weise auch die Wabendichtung gekühlt. Da. jedoch nur einzelne Zellen der Wabendichtung von Kühlluft durchströmt sind, kann eine flächendeckende Kühlwirkung der Wabendichtung durch die bekannte Vorrichtung nicht sichergestellt werden.

Der Erfindung liegt die Aufgabe zugrunde, den gattungsgemäßen Trägerring mit Wabendichtung so zu gestalten, daß die Kühlung der Wabendichtung verbessert und eine Reduktion der Leckageverluste erreicht wird.

Die Aufgabe wird bei einem gattungsgemäßen Trägerring erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Trägerring wird durch die Anwendung der Kühlluftnuten und der tangential angeordneten Kühlbohrungen erreicht, daß die Kühlluft aus der außenliegenden Ringkammer homogen der Wabendichtung zugeführt wird und über die offene Wabenstruktur austreten kann. Hierdurch wird eine intensive Kühlwirkung des Werkstoffes der thermisch hoch beanspruchten Wabendichtung erzeugt. Der Kühlluftstrom erzeugt eine zusätzliche Sperrwirkung im Dichtsystem, wodurch aggressives, heißes Prozeßgas der ersten Turbinenstufe weitestgehend von der Dichtung ferngehalten wird.

Durch eine entsprechende Anordnung der Wabendichtung in vertikaler bzw. horizontaler Richtung wird gleichzeitig eine zusätzliche Sperrwirkung der Laufschaufel labyrinthdichtung bewirkt, indem der Kühlluftstrom und der Laufschaufelleckagestrom sich kreuzen oder entgegengesetzt gerichtet sind. Zur Temperaturabsenkung des Trägerringes und zur Reduzierung der Kühllufterwärmung erhält der Trägerring auf der Prozeßgasseite eine wärmeisolierende Beschichtung.

Die vorliegende Erfindung läßt sich darüber hinaus in allen Fällen der Temperaturabsenkung und/oder Verbesserung der Dichtfähigkeit von Labyrinthdichtungen mit Waben-Gegenlaufflächen einsetzen und ist nicht auf bestimmte Rotationsmaschinen beschränkt.

Durch die gesteuerte Kühlung der Wabendichtung erfolgt generell eine Reduzierung der Werkstofftemperatur, verbunden mit einer Verbesserung der Oxydations- und Korrosionsbeständigkeit sowie einer erheblichen Reduzierung der Dichtungsverluste in der ersten Verdichterstufe der Heißgasturbine. Insgesamt wird das Langzeitleistungsverhalten von Gasturbinen und Turbomaschinen verbessert.

Die Erfindung wird anhand von schematischen Ausführungsbeispielen näher erläutert.

Es zeigen:
- Fig. 1: einen Schnitt durch die erste Turbinenstufe eines Gasgenerators nach dem Stand der Technik,
- Fig. 2: einen Schnitt im Bereich des Trägerringes mit horizontaler Kühlluftzuführung,
- Fig. 3: einen Schnitt im Bereich des Trägerringes mit vertikaler Kühlluftzuführung.

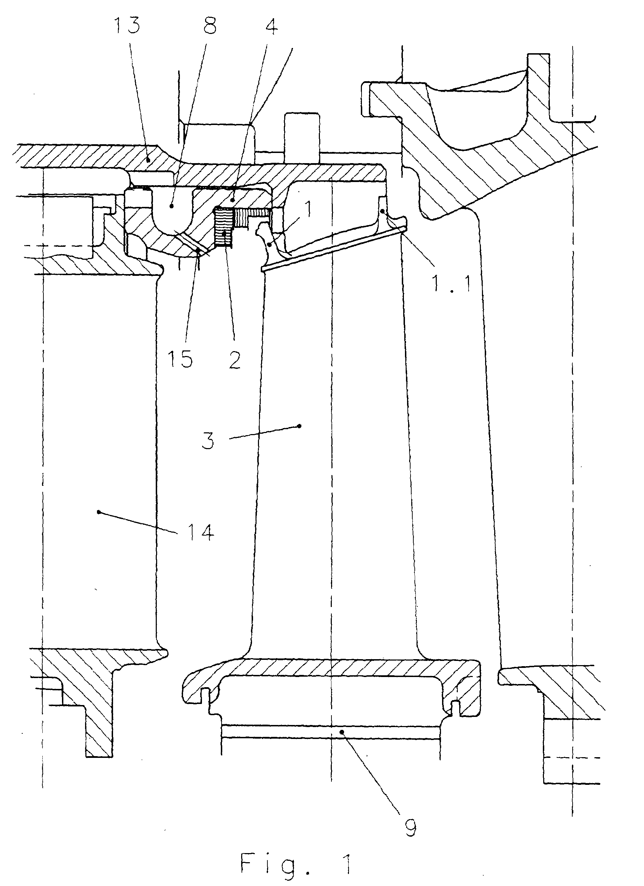

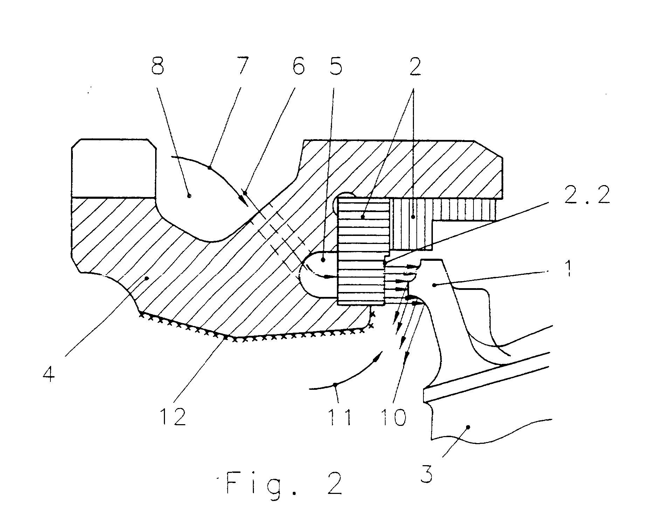

Fig. 1 zeigt die Anordnung einer Wabendichtung (2) im Trägerring (4) der Eingangsstufe einer Gasturbine an der Innenseite der Gehäusewand (13).

Das heiße und verdichtete Prozeßgas strömt aus dem zwischen Brennkammer und Turbine angeordneten Hosenrohr durch das Leitschaufelgitter (14) und trifft auf die Turbinenlaufschaufel (3).

Durch die Anordnung der Wabendichtung (2) im Bereich der Dichtspitzen (1, 1.1) der Laufschaufel (3) wird eine zusätzliche Sperrwirkung der Laufschaufellabyrinthdichtung bewirkt. Die Zuführung von Kühlluft in diesem Bereich erfolgt aus der Ringkammer (8) lediglich über am Umfang verteilte Bohrungen (15) im Trägerring (4).

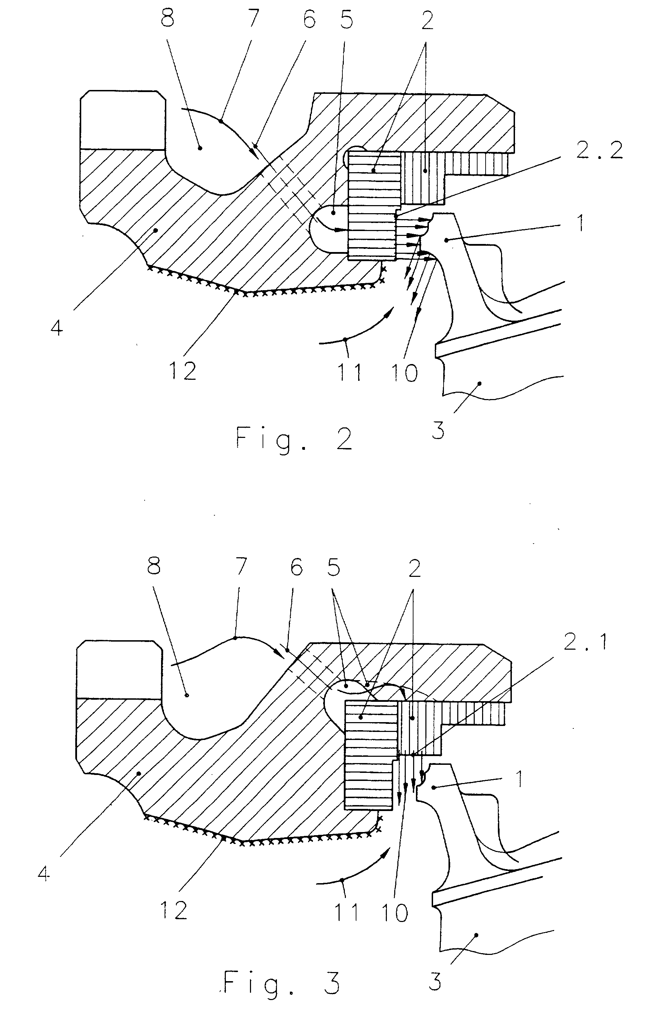

Entsprechend Fig. 2 und 3 werden zur Steigerung der Dichtwirkung als Gegenlaufflächen der Dichtspitzen (1) Wabendichtungen (2) eingesetzt, wobei diese Dichtungen (2) mit vertikalen Bohrungen (2.1) und horizontalen Bohrungen (2.2) ausgeführt werden.

Erfindungsgemäß wird die im Gehäuse (13) angeordnete Wabendichtung (2) einer Gasturbinenlaufschaufelstufe (3) intern gekühlt. Hierzu wird der Trägerring (4) der Wabendichtung (2) mit Kühlluftnuten (5) und tangential angeordneten Kühlbohrungen (6) versehen, so daß die Kühlluft (7) aus der außenliegenden Ringkammer (8) homogen der Wabendichtung (2) zugeführt wird und über die offene Wabenstruktur (2.1, 2.2) austreten kann. Hierdurch wird eine intensive Kühlwirkung der thermisch hoch beanspruchten Wabendichtung (2) erzeugt. Ferner wird aggressives Prozeßgas weitestgehend von der Wabendichtung (2) ferngehalten.

Fig. 2 zeigt einen Schnitt durch den Trägerring (4), wo die Kühlluft (7) über eine Bohrung (6) mit Kühlluftnut (5) in die horizontalen Bohrungen (2.2) der Wabendichtung (2) geleitet wird.

Fig. 3 zeigt einen Schnitt durch den Trägerring (4), wo die Kühlluft (7) über eine Bohrung (6) mit Kühlluftnuten (5) in die vertikalen Bohrungen (2.1) der Wabendichtung (2) geleitet wird.

Durch eine entsprechende Anordnung der Wabendichtung (2) mit vertikalen (2.1) und horizontalen (2.2) Bohrungen wird gleichzeitig an den Dichtspitzen (1, 1.1) der Laufschaufel (3) eine zusätzliche Sperrwirkung der Laufschaufellabyrinthdichtung bewirkt, indem der Kühlluftstrom (10) und der Laufschaufelleckagestrom (11) sich kreuzen oder entgegengesetzt gerichtet sind.

Zur Temperaturabsenkung des Trägerringes (4) und zur Reduzierung der Kühllufterwärmung erhält der Trägerring (4) auf der Prozeßgasseite eine wärmeisolierende Beschichtung (12).

### Bezugsziffernliste:

- 1: Vordere Dichtspitze von 3
- 1.1: Hintere Dichtspitze von 3
- 2: Wabendichtung
- 2.1: Wabendichtung mit vertikalen Bohrungen
- 2.2: Wabendichtung mit horizontalen Bohrungen
- 3: Laufschaufel
- 4: Trägerring
- 5: Kühlluftnut
- 6: Bohrung in 4
- 7: Kühlluft
- 8: Ringkammer
- 9: Rotorscheibe
- 10: Kühlluftstrom
- 11: Laufschaufel-Leckagestrom
- 12: Beschichtung
- 13: Gehäusewand der Turbine
- 14: Eintrittsöffnung Heißgas
- 15: Bohrung in 4

## Patentansprüche

1. Trägerring mit einer gekühlten Wabendichtung (2) für eine Gasturbine, wobei in dem Trägerring (4) Kühlluftbohrungen (6). angeordnet sind und die Wabendichtung (2) vertikale, von Kühlluft durchströmte Bohrungen (2.1) aufweist, **dadurch gekennzeichnet, daß** in den Trägerring (4) an der Außenseite der Wabendichtung (2) Kühlluftnuten (5) eingearbeitet sind, daß die Kühlluftbohrungen (6) tangential angeordnet und mit den Kühlluftnuten (5) verbunden sind, daß die Wabendichtung (2) mit horizontalen Bohrungen (2.2) versehen ist und daß die vertikalen und/oder die horizontalen Bohrungen (2.1, 2.2) der Wabendichtung (2) von der Kühlluft durchströmt sind.

2. Trägerring nach Anspruch 1, **dadurch gekennzeichnet, daß** auf den Trägerring (4) an der Prozeßgasseite eine wärmeisolierende Beschichtung (12) aufgebracht ist.

## Claims

1. Carrier ring with a cooled honeycomb seal (2) for a gas turbine, wherein cooling air bores (6) are arranged in the carrier ring (4) and the honeycomb seal (2) has vertical bores (2.1) flowed through by cooling air, **characterised in that** cooling air grooves (5) are worked into the carrier ring (4) at the outer side of the honeycomb seal (2), that the cooling air bores (6) are arranged tangentially and connected with the cooling air grooves (5), that the honeycomb seal (2) is provided with horizontal bores (2.2) and that the vertical and/or horizontal bores (2.1, 2.2) of the honeycomb seal (2) are flowed through by the cooling air.

2. Carrier ring according to claim 1, **characterised in that** a heat-insulating coating (12) is applied to the carrier ring (4) at the process gas side.

## Revendications

1. Bague support comportant un joint en nid d'abeilles (2) refroidi pour une turbine à gaz, des trous de passage d'air de refroidissement (6) étant disposés dans la bague support (4) et le joint en nid d'abeilles (2) présentant des trous verticaux (2.1) balayés par l'air de refroidissement, **caractérisée en ce que** des rainures de passage d'air de refroidissement (5) sont pratiquées dans la bague support (4) sur le côté extérieur du joint en nid d'abeilles (2), que les trous de passage d'air de refroidissement (6) sont disposés de façon tangentielle et reliés aux rainures de passage d'air de refroidissement (5), que le joint en nid d'abeilles (2) est muni de trous horizontaux (2.2) et que les trous verticaux et/ou les trous horizontaux (2.1, 2.2) du joint en nid d'abeilles (2) sont balayés par l'air de refroidissement.

2. Bague support suivant la revendication 1, **caractérisée en ce qu'**un revêtement calorifuge (12) est appliqué sur la bague support (4), sur le côté du gaz de travail.
